# EUROPEAN PATENT APPLICATION

(11) **EP 4 797 768 A1**
(43) Date of publication of application: **26.08.2026**
(21) Application number: 24878712.9
(22) Date of filing: 02.09.2024
(51) Int. Cl.: H04W 24/02

(54) **ARTIFICIAL INTELLIGENCE SERVICE PROCESSING METHOD AND APPARATUS**

(30) Priority: 20.10.2023 CN 202311370192
(71) Applicant: Datang Mobile Communications Equipment Co., Ltd., Beijing 100085 (CN)
(72) Inventor: HUANG, Yuanfang, Beijing 100085 (CN); WU, Lichen, Beijing 100085 (CN); BAI, Chen, Beijing 100085 (CN)
(74) Representative: Studio Torta S.p.A.
(86) International application number: PCT/CN2024/116271
(87) International publication number: WO 2025/082062

(57) **Abstract**

The present disclosure provides a method and an apparatus for processing an artificial intelligence service, belonging to the technical field of communications. The method of the embodiment of the present disclosure includes: acquiring artificial intelligence (AI) service request information, where the AI service request information includes an identifier or a name of a target AI instance, the target AI instance is used to implement the AI service, and the target AI instance corresponds to different model information in different application scenarios; triggering a process of applying a target model at a target network node according to the AI service request information, where the target model is a model corresponding to the target AI instance in a target application scenario, and the target application scenario is an application scenario of the AI service at the target network node; and acquiring a service result of the AI service according to an execution result of the target model in the target network node.

## Description

### CROSS-REFERENCE TO RELATED APPLICATION

This disclosure claims the priority to the Chinese patent application filed with the China Patent Office on October 20, 2023, with the application number 202311370192.0 and the title "Method and Apparatus for Processing Artificial Intelligence Service", the entire content of which is incorporated into this disclosure by reference.

### TECHNICAL FIELD

This disclosure relates to the technical field of communications, and in particular, to a method and an apparatus for processing an artificial intelligence service.

### BACKGROUND

In the evolution of the 6th-Generation (6G) mobile communication network towards the direction of native intelligence, the Radio Access Network (RAN) not only provides traditional communication functions but also needs to introduce related functions such as intelligence, data and computing, to improve the overall performance of the wireless communication system through artificial intelligence/machine learning technologies. Due to the inherently complex and variable characteristics of wireless communication scenarios and the diversity of services, the RAN architecture in the related art is difficult to realize the collaborative optimization of wireless communication scenarios (conference venues, urban areas, suburban areas, etc.), RAN use cases (traffic management, load balance, energy saving, etc.) and multi-objectives of services, thus failing to meet the performance indicators of 6G.

### SUMMARY

An objective of this disclosure is to provide a method and an apparatus for processing an artificial intelligence service, to solve the problem that the RAN architecture in the related art cannot meet the performance indicators of 6G.

To achieve the above objective, this disclosure provides a method for processing an artificial intelligence service, performed by a first network node, the method comprising:
acquiring artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
triggering a process of applying a target model at a target network node according to the AI service request information, wherein the target model is a model corresponding to the target AI instance in a target application scenario, and the target application scenario is an application scenario of the AI service at the target network node;
acquiring a service result of the AI service according to an execution result of the target model in the target network node.

Optionally, the target network node comprises the first network node.

Optionally, the method further comprises:
deploying the target AI instance at the first network node.

Optionally, the first network node comprises a first functional network layer and a second functional network layer;
the deploying the target AI instance at the first network node comprises:
sending, by the first functional network layer to the second functional network layer, a target AI instance deployment request, wherein the target AI instance deployment request comprises link information of the target AI instance, and the link information is used to indicate storage location information of the target AI instance;
acquiring and executing the target AI instance by the second functional network layer according to the link information;
returning, by the second functional network layer to the first functional network layer, a target AI instance deployment response message.

Optionally, before the first functional network layer sends the target AI instance deployment request to the second functional network layer, the method further comprises:
acquiring, by the first functional network layer according to a profile of the target AI instance, a model included in the target AI instance;
generating the target AI instance by the first functional network layer according to the model.

Optionally, the method further comprises:
sending, by the second functional network layer to the first functional network layer, performance management feedback data of the target AI instance;
updating the target AI instance by the first functional network layer according to the performance management feedback data.

Optionally, the first network node comprises a network node in an access network, a network node in a core network or a terminal;
or, the target network node comprises a network node in an access network, a network node in a core network or a terminal.

Optionally, the AI service comprises at least one of the following:
a traffic management service;
a load balance service;
an energy saving service.

An embodiment of this disclosure further provides an apparatus for processing an artificial intelligence service, comprising a memory, a transceiver and a processor;
wherein the memory is configured to store a computer program; the transceiver is configured to send and receive data under the control of the processor; the processor is configured to read the computer program in the memory and perform the following operations:
acquiring artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
triggering a process of applying a target model at a target network node according to the AI service request information, wherein the target model is a model corresponding to the target AI instance in a target application scenario, and the target application scenario is an application scenario of the AI service at the target network node;
acquiring a service result of the AI service according to an execution result of the target model in the target network node.

Optionally, the target network node comprises the first network node.

Optionally, the processor further performs the following operation:
deploying the target AI instance at the first network node.

Optionally, the first network node comprises a first functional network layer and a second functional network layer;
the processor further performs the following operations:
sending, by the first functional network layer to the second functional network layer, a target AI instance deployment request, wherein the target AI instance deployment request comprises link information of the target AI instance, and the link information is used to indicate storage location information of the target AI instance;
acquiring and executing the target AI instance according to the link information;
returning, by the second functional network layer to the first functional network layer, a target AI instance deployment response message.

Optionally, the processor further performs the following operations:
acquiring, according to a profile of the target AI instance, a model included in the target AI instance;
generating the target AI instance according to the model.

Optionally, the processor further performs the following operations:
sending, by the second functional network layer to the first functional network layer, performance management feedback data of the target AI instance;
updating the target AI instance according to the performance management feedback data.

Optionally, the first network node comprises a network node in an access network, a network node in a core network or a terminal;
or, the target network node comprises a network node in an access network, a network node in a core network or a terminal.

Optionally, the AI service comprises at least one of the following:
a traffic management service;
a load balance service;
an energy saving service.

An embodiment of this disclosure further provides an apparatus for processing an artificial intelligence service, comprising:
a first acquisition unit, configured to acquire artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
a processing unit, configured to trigger a process of applying a target model at a target network node according to the AI service request information, wherein the target model is a model corresponding to the target AI instance in a target application scenario, and the target application scenario is an application scenario of the AI service at the target network node;
a second acquisition unit, configured to acquire a service result of the AI service according to an execution result of the target model in the target network node.

An embodiment of this disclosure further provides a processor-readable storage medium, where the processor-readable storage medium stores a computer program, and the computer program is used to enable a processor to perform the steps of the method for processing an artificial intelligence service as described above.

The above technical solutions of this disclosure have at least the following beneficial effects:
in the embodiment of this disclosure, AI service request information is acquired, where the AI service request information includes an identifier or a name of a target AI instance, the target AI instance is used to implement an AI service, and the target AI instance corresponds to different model information in different application scenarios; a process of applying a target model at a target network node is triggered according to the AI service request information, where the target model is a model corresponding to the target AI instance in a target application scenario, and the target application scenario is an application scenario of the AI service; a service result of the AI service is acquired according to an execution result of the target model in the target network node. In this solution, different target models in the target AI instance are applied at the target network node for different application scenarios, so that the target AI instance can be adapted to various application scenarios in wireless communication scenarios (e.g., including service characteristics, traffic characteristics, load characteristics, etc.), thereby realizing the collaborative optimization of various scenario characteristics in the wireless communication scenarios and further meeting the performance indicators of 6G.

### BRIEF DESCRIPTION OF THE DRAWINGS

Fig. 1 is a structural diagram of a network system to which an embodiment of this disclosure is applicable;
Fig. 2 is a schematic diagram of an intelligent framework of a radio access network;
Fig. 3 is a schematic flow chart of a method for processing an artificial intelligence service according to an embodiment of this disclosure;
Fig. 4 is a schematic diagram of a RAN architecture according to an embodiment of this disclosure;
Fig. 5 is a first schematic diagram of a relationship between a consumer and each functional module according to an embodiment of this disclosure;
Fig. 6 is a second schematic diagram of a relationship between a consumer and each functional module according to an embodiment of this disclosure;
Fig. 7 is a schematic diagram of a lifecycle management of an AI instance according to an embodiment of this disclosure;
Fig. 8 is a first schematic interaction diagram of a method for processing an artificial intelligence service according to an embodiment of this disclosure;
Fig. 9 is a second schematic interaction diagram of a method for processing an artificial intelligence service according to an embodiment of this disclosure;
Fig. 10 is a schematic configuration diagram of an AI instance in the interaction process shown in Fig. 9;
Fig. 11 is a schematic configuration diagram of an AI instance in a base station and terminal collaboration use case according to an embodiment of this disclosure;
Fig. 12 is a third schematic interaction diagram of a method for processing an artificial intelligence service according to an embodiment of this disclosure;
Fig. 13 is a fourth schematic interaction diagram of a method for processing an artificial intelligence service according to an embodiment of this disclosure;
Fig. 14 is a first structural block diagram of an apparatus for processing an artificial intelligence service according to an embodiment of this disclosure;
Fig. 15 is a second structural block diagram of an apparatus for processing an artificial intelligence service according to an embodiment of this disclosure;
Fig. 16 is a schematic module diagram of an apparatus for processing an artificial intelligence service according to an embodiment of this disclosure.

### DETAILED DESCRIPTION

The technical solutions in the embodiments of this disclosure will be clearly and completely described below with reference to the accompanying drawings in the embodiments of this disclosure. Obviously, the described embodiments are some rather than all of the embodiments of this disclosure. All other embodiments obtained by a person of ordinary skill in the art based on the embodiments of this disclosure without creative efforts shall fall within the protection scope of this disclosure.

The terms such as "first", "second" and the like in the specification and claims of this disclosure are used to distinguish similar objects, and are not necessarily used to describe a specific order or sequence. It should be understood that the terms used in this way can be interchanged under appropriate circumstances, so that the embodiments of this disclosure described herein can be implemented in an order other than those illustrated or described herein. In addition, the terms "include" and "have" and any variations thereof are intended to cover non-exclusive inclusion. For example, a process, method, system, product or device including a series of steps or units is not necessarily limited to the clearly listed steps or units, but may include other steps or units that are not clearly listed or are inherent to the process, method, product or device.

The term "and/or" in the embodiments of this disclosure describes an association relationship between associated objects, indicating that three relationships may exist. For example, A and/or B may indicate three situations: A exists alone, both A and B exist, and B exists alone. The character "/" generally indicates that the associated objects are in an "or" relationship. The term "plurality" in the embodiments of this disclosure refers to two or more, and the same applies to other quantifiers.

In the embodiments of this disclosure, the words "exemplary" or "for example" are used to serve as an example, illustration or explanation. Any embodiment or design solution described as "exemplary" or "for example" in the embodiments of this disclosure shall not be construed as being more preferred or having more advantages than other embodiments or design solutions. Specifically, the use of the words "exemplary" or "for example" is intended to present related concepts in a specific manner.

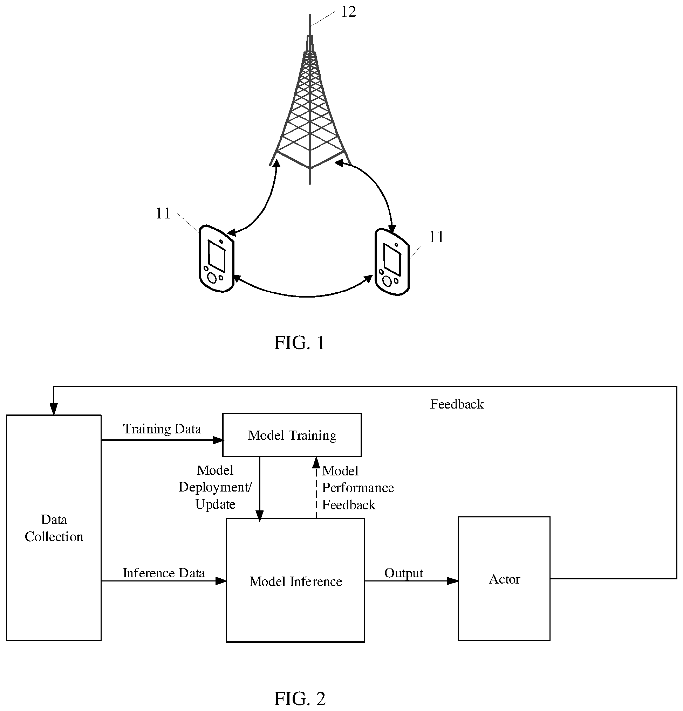

Fig. 1 shows a block diagram of a wireless communication system to which an embodiment of this disclosure is applicable. The wireless communication system includes a terminal device 11 and a network-side device (or network device) 12. The terminal device 11 may also be referred to as a terminal or a User Equipment (UE). It should be noted that the specific type of the terminal 11 is not limited in the embodiment of this disclosure. The network-side device 12 may be a base station or a core network. It should be noted that only a base station in the NR system is taken as an example in the embodiment of this disclosure, but the specific type of the base station is not limited.

To enable a person skilled in the art to better understand the embodiments of this disclosure, the following explanations are first provided.
(I) Intelligent Framework of Radio Access Network (RAN)

As shown in Fig. 2, an intelligent framework of a radio access network, where:
Data Collection provides input data for Model Training and Model Inference, and data preprocessing specific to AI/ML algorithms is not implemented in Data Collection.

Model Training performs training, verification and testing of an Artificial Intelligence (AI)/Machine Learning (ML) model, and may generate model performance indicators during the testing process. If necessary, the Model Training function may be responsible for data preprocessing based on training data provided by Data Collection.

Model Deployment/Update: configured to initially deploy an AI/ML model that has completed training, verification and testing to the Model Inference module, or transmit an updated model to the Model Inference module.

Model Inference provides an AI/ML model inference output (such as prediction or decision-making). The Model Inference may provide model performance feedback to the Model Training function when appropriate. If necessary, the Model Inference module may also be responsible for data preprocessing based on inference data provided by the Data Collection function.

An Actor receives an output from the Model Inference function and triggers the execution of a corresponding action, and it can trigger an action directed to other entities or itself.

Feedback: configured to acquire information required for training data, inference data or monitoring AI/ML model performance and its possible impact on the network by updating a Key Performance Indicator (KPI) and a performance counter.

Taking an AI/ML-based load balance use case as an example, when mapping the functional framework to a specific network architecture, there are the following two scenarios:
Scenario 1: AI/ML model training is performed at an Operation Administration and Maintenance (OAM) node, and inference is performed at a Next Generation Radio Access Network/5G Radio Access Network (NG-RAN) node. The specific signaling process includes:
It is assumed that an NG-RAN Node 2 (referred to as Node 2 for short) has an AI/ML model, and may provide input data such as predicted resource status to an NG-RAN Node 1 (referred to as Node 1 for short);
Node 1 configures a UE to provide measurement or location information, and collects information reported by the UE; Node 1 sends a UE measurement report and other input data to the OAM; Node 2 sends input data to the OAM; the AI/ML model training is deployed at the OAM, and the OAM performs model training by using the data provided by the NG-RAN Nodes; the OAM deploys/updates the AI/ML model to the NG-RAN Node (the node may also continue model training); the UE collects the requested measurement or location information and reports it to Node 1; Node 1 receives input information for inference from the adjacent Node 2; Node 1 performs model inference and generates a load balance prediction or decision; and may send model performance feedback to the OAM; Node 1 may execute a load balance action to move the UE to Node 2; Node 1 and Node 2 send feedback information to the OAM.

Scenario 2: Both AI/ML model training and inference are performed at an NG-RAN node. The specific signaling process includes:
It is assumed that an NG-RAN Node 2 (referred to as Node 2 for short) has an AI/ML model, and may provide input such as predicted resource status to an NG-RAN Node 1 (referred to as Node 1 for short);
Node 1 configures a UE to provide measurement or location information, and collects information reported by the UE; Node 1 receives input information for training from the adjacent Node 2; Node 1 trains an AI/ML model by using the collected measurement and input data; Node 1 receives UE measurement or location information; Node 1 receives input information for load balance inference from the adjacent Node 2; Node 1 performs model inference and generates a load balance prediction or decision; Node 1 may take a load balance action to move the UE to Node 2; Node 2 sends feedback information to Node 1.

Considering the split architecture on the RAN side, there are the following two implementation modes:
AI/ML model training is performed at the OAM, and inference is performed at a New Radio NodeB-Centralized Unit (gNB-CU);
Both AI/ML model training and inference are performed at the gNB-CU.

The method for processing an artificial intelligence service provided by the embodiment of this disclosure is described in detail below with reference to the accompanying drawings through some embodiments and their application scenarios.

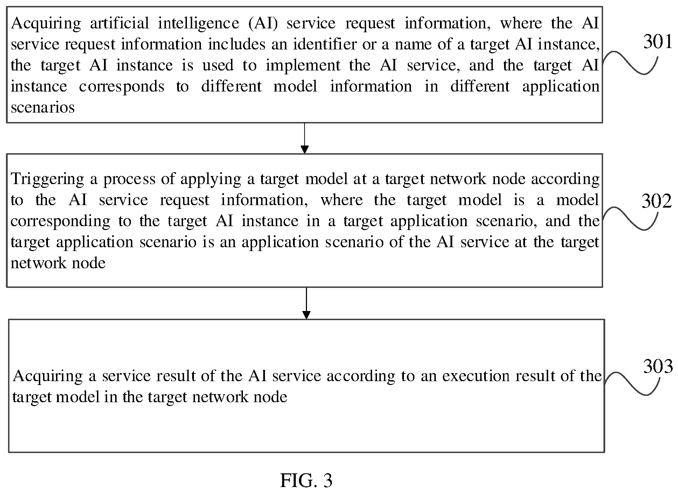

As shown in Fig. 3, an embodiment of this disclosure provides a method for processing an artificial intelligence service, performed by a first network node. Optionally, the first network node includes a network node in an access network, a network node in a core network or a terminal. The method includes:
Step 301: Acquiring artificial intelligence (AI) service request information, where the AI service request information includes an identifier or a name of a target AI instance, the target AI instance is used to implement the AI service, and the target AI instance corresponds to different model information in different application scenarios; the model information corresponding to each application scenario includes at least one model.

It should be noted that the model included in the model information may be an AI model or a non-AI model, that is, the model in the model information includes at least one of an AI model and a non-AI model.

The AI service includes at least one of a traffic management service, a load balance service and an energy saving service.

Certainly, the AI service may also be other services, which are not specifically limited herein.

In the embodiment of this disclosure, different application scenarios correspond to different scenario characteristics, where the scenario characteristics include but are not limited to at least one of the following: service characteristics (such as eXtended Reality (XR), Vehicle to Everything (V2X)), scenario locations (conference venues, urban areas, suburban areas, etc.).

The AI service request information may be sent by a consumer to the first network node, or triggered by an instance management function in the first network node according to service requirements or performance feedback.

Step 302: Triggering a process of applying a target model at a target network node according to the AI service request information, where the target model is a model corresponding to the target AI instance in a target application scenario, and the target application scenario is an application scenario of the AI service at the target network node.

Optionally, the target network node includes at least one network node. Optionally, the target network node includes a network node in an access network, a network node in a core network or a terminal.

In the embodiment of this disclosure, the at least one network node may include the above-mentioned first network node, or may include a second network node other than the above-mentioned first network node. That is, the target network node includes the first network node and/or at least one second network node.

As an optional implementation mode, the target network node includes the first network node, that is, the target network node may be the first network node itself. The first network node includes a network node in an access network, a network node in a core network or a terminal.

As another optional implementation mode, the target network node includes the above-mentioned first network node and at least one second network node, or the target network node includes at least one second network node. The above-mentioned second network node is a network node different from the first network node, and the second network node includes a network node in an access network, a network node in a core network or a terminal.

The target AI instance includes a variety of model information in different application scenarios of the AI service. Unified description and flexible configuration of the AI instance service in different application scenarios can be realized through the target AI instance.

Step 303: Acquiring a service result of the AI service according to an execution result of the target model in the target network node.

In the embodiment of this disclosure, AI service request information is acquired, where the AI service request information includes an identifier or a name of a target AI instance, the target AI instance is used to implement an AI service, and the target AI instance corresponds to different model information in different application scenarios; a process of applying a target model at a target network node is triggered according to the AI service request information, where the target model is a model corresponding to the target AI instance in a target application scenario, and the target application scenario is an application scenario of the AI service; a service result of the AI service is acquired according to an execution result of the target model in the target network node. In this solution, different target models in the target AI instance are applied at the target network node for different application scenarios, so that the target AI instance can be adapted to various application scenarios in wireless communication scenarios (e.g., including service characteristics, traffic characteristics, load characteristics, etc.), thereby realizing the collaborative optimization of various scenario characteristics in the wireless communication scenarios and further meeting the performance indicators of 6G.

As an implementation mode, the applying the target model at the target network node includes applying a first model set at the first network node and a second model set at the second network node, where the first model set and the second model set each include at least one model.

At least part of output parameters of at least part of the models in the second model set are input parameters of at least part of the models in the first model set, and the result of the AI service is obtained based on an operation result of the models in the first model set, or the result of the AI service is obtained based on operation results of the first model set and the second model set.

Or, at least part of output parameters of at least part of the models in the first model set are input parameters of at least part of the models in the second model set, and the result of the AI service is obtained based on an operation result of the models in the second model set, or the result of the AI service is obtained based on operation results of the first model set and the second model set.

In the case that the target network node includes the above-mentioned second network node, the second network node feeds back an operation result of the target model to the first network node, and the first network node obtains the service result of the AI service according to an operation result of the target model in the first network node and an operation result of the model in the second network node, or the first network node obtains the service result of the AI service according to an operation result of the model in the second network node.

In the embodiment of this disclosure, by applying the target model in the target AI instance at the first network node and the second network node, the function of the AI service can be realized through the cooperation of multiple network nodes in the wireless network. For example, both the first network node and the second network node are base stations; or, the first network node is a base station and the second network node is a terminal.

For example, the first network node is Base Station 1 and the second network node is Base Station 2, the target models applied by the first network node are a first model and a second model, and the model applied by the second network node is a third model, where the first model, the second model or the third model each includes at least one model. At least part of output parameters of the second model and at least part of output parameters of the third model are input parameters of the first model, and an output result of the first model is the service result of the AI service, thereby realizing the function of the AI service through the cooperation of multiple network nodes in the wireless network.

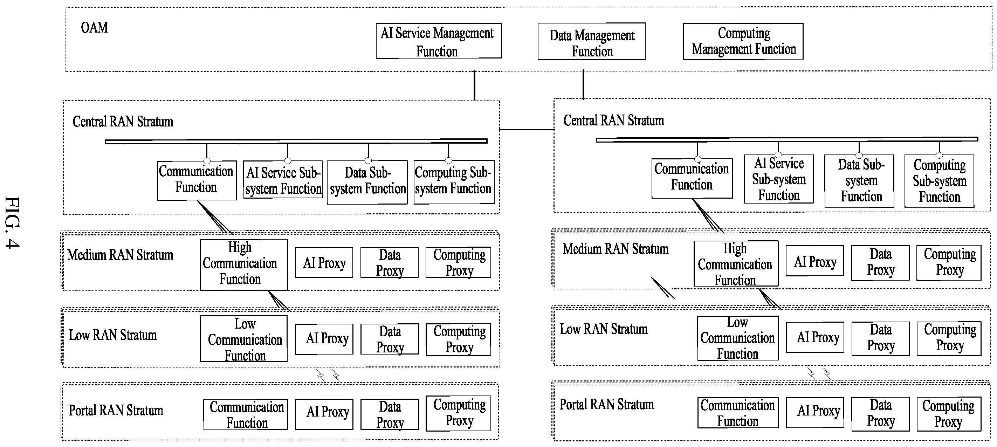

The method for processing an artificial intelligence service in the embodiment of this disclosure is based on a RAN architecture supporting intelligence. Optionally, a RAN architecture is as shown in Fig. 4.

The OAM includes an AI Service Management Function, a Data Management Function and a Computing Management Function. A base station includes a Central RAN Stratum, a Medium RAN Stratum and a Low RAN Stratum, and a terminal includes a Portal RAN Stratum.

The above-mentioned AI Service Management Function can provide management and monitoring of functions and resources across nodes (such as between different base stations);

The above-mentioned Data Management Function can provide management and monitoring of functions and resources across nodes (such as between different base stations);

The above-mentioned Computing Management Function can provide management and monitoring of functions and resources across nodes (such as between different base stations).

The above-mentioned Central RAN Stratum can perform scenario identification and AI Instance generation, storage, execution and performance evaluation, can expose AI Instance, AI Model, Data or computing capabilities to the OAM, and can participate in the generation, storage, execution and performance evaluation of AI Instances across nodes (such as base stations) scheduled by the AI Service Management Function of the OAM. As a RAN functional module, the Central RAN Stratum may be deployed inside or outside a Centralized Unit (CU) according to an optional policy.

The Medium RAN Stratum can receive and deploy an AI Instance provided by the Central RAN Stratum, and can provide performance data to the Central RAN Stratum; can realize scenario identification and AI Instance storage and selection, and realize AI Instance performance evaluation, management and the like; as a middle-layer function of the RAN, the Medium RAN Stratum may be deployed inside or outside a Distributed Unit (DU) according to an optional policy.

The Low RAN Stratum can only deploy an AI Instance provided by the Medium RAN Stratum and report performance data; as a lower-layer function of the RAN, the Medium RAN Stratum may be deployed inside or outside a Radio Unit (RU) according to an optional policy. Optionally, the AI Instance provided by the Medium RAN Stratum is transmitted by the Central RAN Stratum to the Medium RAN Stratum, that is, the Medium RAN Stratum transparently transmits the AI Instance provided by the Central RAN Stratum.

The Portal RAN Stratum can realize scenario identification, AI Instance storage and selection, AI Instance performance evaluation and report performance data. The Portal RAN Stratum can be deployed in a terminal.

Further, the above-mentioned Central RAN Stratum includes a Communication Function, an AI Service Sub-system Function (AI3S), a Data Sub-system Function (DSS) and a Computing Sub-system Function (CSS).

The AI3S can provide services of AI model management, AI model monitoring, AI Instance management and AI Instance monitoring. Considering different latency requirements, storage capabilities, security requirements and the like, the AI3S can be modified to only support services of AI model monitoring and AI Instance monitoring, that is, an AI Proxy.

The DSS can provide services of a data pool, an AI model library and an AI Instance library. Considering different latency requirements, storage capabilities, security requirements and the like, the DSS can be modified to only support a data collection function, that is, a Data Proxy.

The CSS can provide services of AI model training, AI model inference, AI Instance generation and AI Instance deployment and execution. Considering different latency requirements, storage capabilities, security requirements and the like, the CSS can be modified to only support services of AI model inference and AI Instance deployment and execution, that is, a Computing Proxy.

In addition, the Consumers in the embodiments of the present disclosure are consumers of the above-mentioned services, and may be located inside a radio access network node, outside the node or outside the radio access network node (such as a core network, a terminal and a third-party server).

Specific functions of the above-mentioned modules may refer to Table 1.

**Table 1**

| Function Name | Function Description | |
|---|---|---|
| AI3S | AI Model Management | Model loading, security authentication for model loading, model storage configuration, model training/retraining configuration, model deployment; model activation/deactivation; model selection and switching configuration; model fallback configuration. |
| | AI Model Monitoring | Model monitoring configuration, model performance feedback. |
| | AI Instance Management | AI Instance template loading, security authentication for AI Instance template loading, AI Instance template storage configuration, AI Instance generation and update configuration; AI Instance deployment; AI Instance activation/deactivation; AI Instance selection and switching configuration; AI Instance monitoring configuration; AI Instance performance reporting (feedback) configuration; AI Instance fallback configuration. |
| | AI Instance Monitoring | AI Instance monitoring configuration, AI Instance performance feedback. Receive a monitoring instruction from the AI Instance management function, perform acquisition of monitoring data, and return a monitoring result to the AI Instance management function. According to the monitoring type, report monitoring result/data to the AI Instance management function when the timing is reached or the relevant status changes. |
| DSS | Data Pooling | Data collection, preprocessing, analysis, storage, etc. |
| | Model Storage | AI model library, which can store templates, files or images of AI models, and can complete functions such as registration, discovery, update, subscription, notification and un-subscription of AI models. The objects stored in the model library are not limited to AI models, but may also include storage of AI Instance, templates, configuration files, model configuration files or images. |
| | Instance Storage | AI Instance library, which can store templates, files or images of AI Instances, and can complete functions such as registration, discovery, update, subscription, notification and un-subscription of AI Instances. |
| CSS | Model Training | Model training function. |
| | Model Inference | Model deployment and inference function. |
| | AI Instance Execution | AI Instance deployment and execution function. |
| AI Service Management Function | | Can provide management and monitoring of functions and resources across nodes (such as between different base stations). |
| Data Management Function | | Can provide management and monitoring of functions and resources across nodes (such as between different base stations). |
| Computing Management Function | | Can provide management and monitoring of functions and resources across nodes (such as between different base stations). |

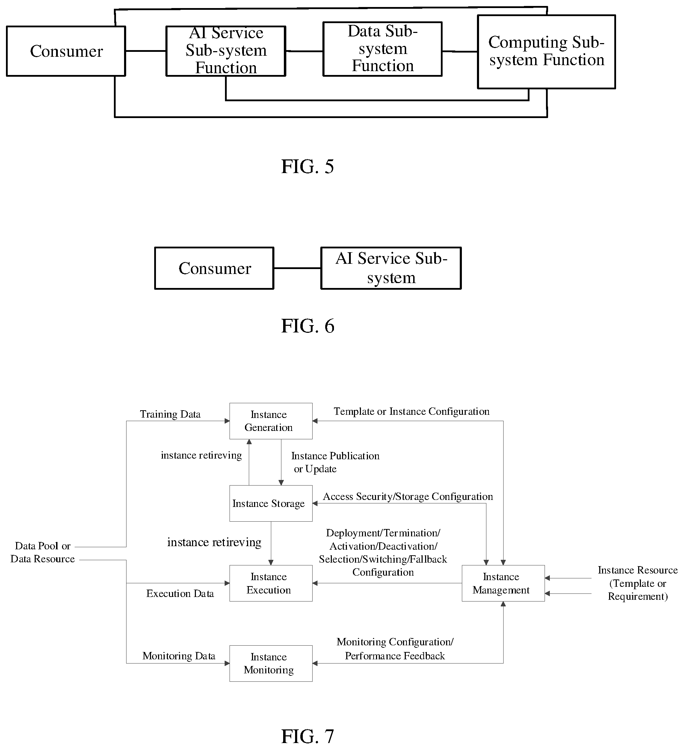

Optionally, as a first implementation mode, a schematic diagram of a relationship between a consumer and the above-mentioned functional modules is as shown in Fig. 5; as another implementation mode, a schematic diagram of a relationship between a consumer and each functional module is as shown in Fig. 6, and the AI3S in Fig. 6 can realize all services in the first implementation mode.

Optionally, the target network node includes the first network node, and the method further includes:
Deploying the target AI instance at the first network node.

Here, the target AI instance is deployed at the first network node to facilitate the subsequent application of the target model in the target AI instance based on the AI service request information.

Optionally, the first network node includes a first functional network layer and a second functional network layer;
the deploying the target AI instance at the first network node includes:
Sending, by the first functional network layer to the second functional network layer, a target AI instance deployment request, where the target AI instance deployment request includes link information of the target AI instance, and the link information is used to indicate storage location information of the target AI instance;
Acquiring and executing the target AI instance by the second functional network layer according to the link information;
Returning, by the second functional network layer to the first functional network layer, a target AI instance deployment response message.

Optionally, the above-mentioned first functional network layer may be an instance management function in the AI3S of the first network node, and the second functional network layer may be an instance execution function in the Computing Proxy of the first network node. Specifically, the instance execution function in the AI Proxy of the first network node may send a target AI instance deployment request to the instance execution function in the Computing Proxy. The instance execution function in the Computing Proxy acquires the target AI instance by interacting with the instance storage function of the DSS based on the link information.

As an optional implementation mode, the above-mentioned first network node is a base station, the above-mentioned first functional network layer is a CU, and the above-mentioned second functional network layer is a DU.

Optionally, before the first functional network layer sends the target AI instance deployment request to the second functional network layer, the method further includes:
acquiring, by the first functional network layer according to a profile of the target AI instance, a model included in the target AI instance;
generating the target AI instance by the first functional network layer according to the model.

In the embodiment of this disclosure, the profile of the target instance is a description of the target instance, including related function or use case information, scenario information, model information, other resource information and the like. Specifically, the AI Instance Profile Information is as shown in Table 2.

**Table 2**

| Parameter Name | Type | Parameter Meaning |
|---|---|---|
| AI Instance Id | Number | AI Instance identification information, used by the terminal and the network to identify the AI Instance. |
| AI Instance Stage | Enum | AI Instance stage: training or inference |
| List of Use Case/Feature | List | Use Case/Feature: composed of one or more sub use cases/features, such as load balance, energy saving, mobility, etc. |
| >Use case/feature item | Structure | |
| >use case/feature ID | Number | |
| >>AI Model List | List | AI model information |
| >>>AI Model Item | Structure | |
| >>>>AI Model ID | Number | AI Model identification information, used by the terminal and the network to identify the AI Model. |
| >>>>AI Model Algorithm Type and Key Parameters | Enum | Algorithm type description, such as Deep Neural Network (DNN), Convolutional Neural Network (CNN), Recurrent Neural Network (RNN), etc. Key parameters: such as neural network structure (number of layers, number of neurons, etc.) |
| >>>>AI Model File Address | String | Including the file address of the model and the input and output addresses of the model. The input of the model may come from the output of other models, and the output of the model may be used as the input of other models. |
| >>Non-AI Module List | List | Module information of non-AI models. That is, information about non-AI enabled modules that may be required to implement the AI Instance. |
| >>>Non-AI Module Item | Structure | Note: Non-AI Module is used for which use cases/features that require a combination of AI and non-AI methods. |
| >>>>Non-AI Module ID | Number | |
| >>>>Non-AI Module Address | String | Including the file address of the module and the input and output addresses of the module. The input of the module may come from the output of other AI models/non-AI modules, and the output of the module may be used as the input of other AI models/non-AI modules. |
| AI Instance File Address | String | Including the file address of the AI Instance and the input and output addresses of the AI Instance. |
| AI Instance Effective Time | DateTime | Effective execution time, such as the time range in which the AI Instance is suitable for executing. |
| AI Instance Effective Space | String | Effective execution space, such as geographic location information, cell information, etc. |
| AI Instance Assurance Metrics | String | May be: |
| | | 1. Accuracy of the AI Instance: such as the deviation between the output of the AI Instance and the expected value; |
| | | 2. Performance indicator requirements of the AI Instance: different use cases correspond to different indicators, such as energy efficiency, data rate, load, latency, jitter, resource utilization, coverage, spectral efficiency, connection density, capacity, maximum UE moving speed, etc. |
| | | 3. Quality of Service (QoS)/Quality of Experience (QoE) targets. |
| AI Instance generation duration | Number | Generation duration. |
| AI Instance execution duration | Number | Execution duration. |
| AI Instance execution time | Number | Execution time. |

In the embodiment of this disclosure, a lifecycle management of an AI instance is as shown in Fig. 7, where:
Instance Management: a management function for (the lifecycle of) an AI Instance. Receive a request from a Consumer, drive processes such as AI Instance configuration, AI Instance access and access security management, AI Instance deployment/termination/activation/deactivation/selection/switching/fallback and AI Instance monitoring and performance feedback, obtain results of related processes, and feed back a result response message to the Consumer;
Instance Generation: an AI Instance generation function. Receive a configuration request from the AI Instance Management function, acquire required resources such as models, parameters, AI and non-AI environments according to the AI Instance Profile, and generate a deployable AI Instance; publish or update the generated AI Instance to the AI Instance Storage function; feed back an AI Instance configuration result to the AI Instance Management function, etc.;
Instance Storage: an AI Instance storage function. Complete the storage of AI Instances, and functions such as registration, discovery, update, subscription, notification and un-subscription of AI Instances. The objects stored in the Instance Storage are not limited to AI Instances (File/Image), but may also include configuration files (Profiles), parameters and the like;
Instance Execution: an AI Instance execution function. Receive an operation request from the AI Instance Management function; acquire an AI Instance from the AI Instance Storage function (if necessary); specifically execute related operations such as deployment/termination/activation/deactivation/selection/switching/fallback of the AI Instance; feed back an AI Instance execution result to the AI Instance Management function, etc.;
Instance Monitoring: an AI Instance monitoring function. Receive a monitoring instruction from the AI Instance Management function; perform measurement and acquisition of monitoring data; return a monitoring result to the AI Instance Management function. According to the monitoring type, report monitoring result/data to the AI Instance Management function regularly or when the relevant status changes.

In addition, in the case that the target network node includes a second network node, the triggering a process of applying a target model at a target network node according to the AI service request information includes:
Sending the AI service request information to the second network node.

The processing flow of the second network node after receiving the AI service request information is similar to that of the first network node after receiving the AI service request information, and will not be repeated in the embodiment of this disclosure.

The deployment of an AI instance in this disclosure is described below with reference to Embodiment 1.

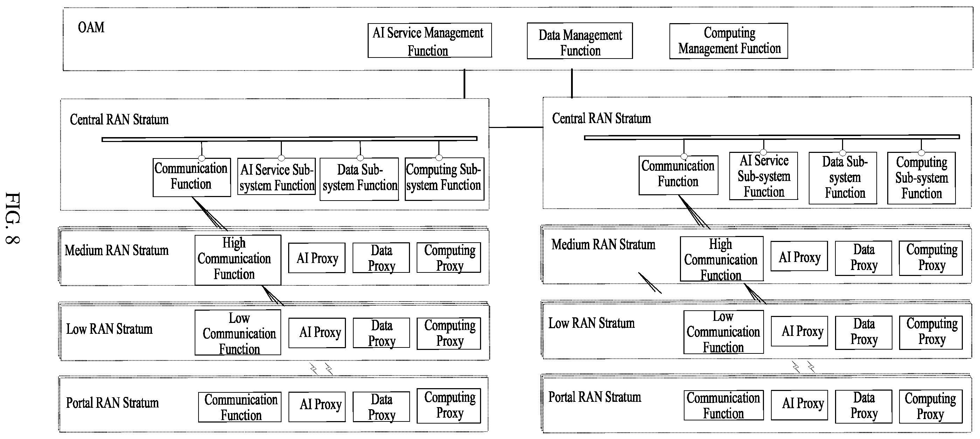

Embodiment 1: In this embodiment, the model in the AI instance is taken as an AI model for example description, and certainly may also include a non-AI model:
As shown in Fig. 8, the deployment process includes:
Step 1: A Consumer sends an AI Instance configuration request message to the "Instance Management" of the AI3S, where the message carries an Instance ID or an Instance name.

The AI Instance configuration request message is sent by the Consumer to the Instance Management of the AI3S according to service requirements or performance feedback.

In addition, the above-mentioned AI Instance configuration request message may also be initiated by the Instance Management of the AI3S according to service requirements or performance feedback, requiring the consumer to configure and implement the AI Instance. Specifically, the Instance Management of the AI3S sends an AI Instance configuration request message to the consumer according to service requirements or performance feedback, and the consumer returns an AI Instance configuration confirmation message.

Step 2: The "Instance Management" sends an AI Instance link acquisition request message to the "Instance Storage" of the DSS, where the message carries an Instance ID or an Instance name;
Step 3: In this disclosure, AI Instances are stored in a distributed manner in each base station, so the "Instance Storage" queries the AI Instance configuration Profile and the AI Instance link corresponding to the Instance ID/name in a local-first (the "Instance Storage" of the current base station) and then global (for example: from the Data Management Function in the OAM in the reference architecture) manner. If the AI Instance exists, its link may be located in the "Instance Storage" of the current base station or another base station;
Step 4: The "Instance Storage" returns an AI Instance link acquisition response message to the "Instance Management". If the AI Instance exists, the response message carries the AI Instance configuration Profile and the AI Instance link; otherwise, only the AI Instance configuration Profile is carried;
If the AI Instance exists, go to Step 16; otherwise, execute Step 5.

Step 5: Since the AI Instance is not generated (first configuration), the "Instance Management" sends an AI Instance configuration request message to the "Instance Generation" of the CSS, where the message carries the AI Instance configuration Profile;
Step 6: The "Instance Generation" analyzes the AI Instance configuration Profile to obtain model and environment information included in the AI Instance, and then iteratively executes Steps 7 to 12 to acquire all included AI models;
Step 7: The "Instance Generation" sends an AI model link acquisition request message to the "Model Management" of the AI3S, where the message carries a model ID or a model name;
Step 8: The "Model Management" sends an AI model link acquisition request message to the "Model Storage" of the DSS, where the message carries a model ID or a model name;
Step 9: In this disclosure, AI models are stored in a distributed manner in each base station, so the "Model Storage" of the DSS queries the model link corresponding to the model ID/name in a local-first (the "Model Storage" of the current base station) and then global (for example: from the Data Management Function in the OAM in Embodiment 1) manner. If the AI model exists, its model link may be located in the "Model Storage" of the current base station or another base station;
Step 10: The "Model Storage" returns an AI model link acquisition response message to the "Model Management", where the message carries the model link;
Step 11: The "Model Management" returns an AI model link acquisition response message to the "Instance Generation", where the message carries the model link;
Step 12: The "Instance Generation" interacts with the "Model Storage" of the DSS (which may be located in the current base station or another base station) to obtain the AI model corresponding to the model link. Here, the "Instance Generation" and the "Model Storage" may interact multiple times for block transmission, or transmission may be performed through the File Transfer Protocol (FTP), depending on the specific implementation;
Step 13: The "Instance Generation" generates an AI Instance image according to the AI Instance configuration Profile;
Step 14: The "Instance Generation" interacts with the "Instance Storage" of the DSS to publish the AI Instance. Here, the "Instance Generation" and the "Instance Storage" may interact multiple times for block transmission of the AI Instance image, or transmission may be performed through the File Transfer Protocol (FTP), depending on the specific implementation. An instance link is obtained after the publication is completed;
Step 15: The "Instance Generation" returns an AI Instance configuration response message to the "Instance Management", where the message carries an Instance ID or an Instance name and the AI Instance link;
Steps 16-17: The "Instance Management" sends an AI Instance deployment request message to the "Instance Execution" of the Computing Proxy (CP) through the "Instance Proxy" of the AI Proxy (AP) (which may be multi-level), where the message carries the AI Instance link;
Step 18: The "Instance Execution" of the CP interacts with the "Instance Storage" of the DSS (which may be located in the current base station or another base station) to acquire the AI Instance corresponding to the instance link. Here, the "Instance Execution" of the CP and the "Instance Storage" of the DSS may interact multiple times for block transmission of the AI Instance image, or transmission may be performed through the File Transfer Protocol (FTP), depending on the specific implementation;
Step 19: The "Instance Execution" of the CP loads and starts/executes the AI Instance;
Steps 20-21: The "Instance Execution" of the CP returns an AI Instance deployment response message (i.e., an AI instance deployment response) to the "Instance Management" through the "Instance Proxy" of the AI Proxy (AP) (which may be multi-level), carrying a deployment result, and if the deployment fails, further carrying a failure cause;

Step 22: The "Instance Management" returns an AI Instance configuration response message to the "Consumer", carrying a configuration result, and if the configuration fails, further carrying a failure cause.

The application of an AI instance in this disclosure is described below with reference to Embodiment 2 and Embodiment 3.

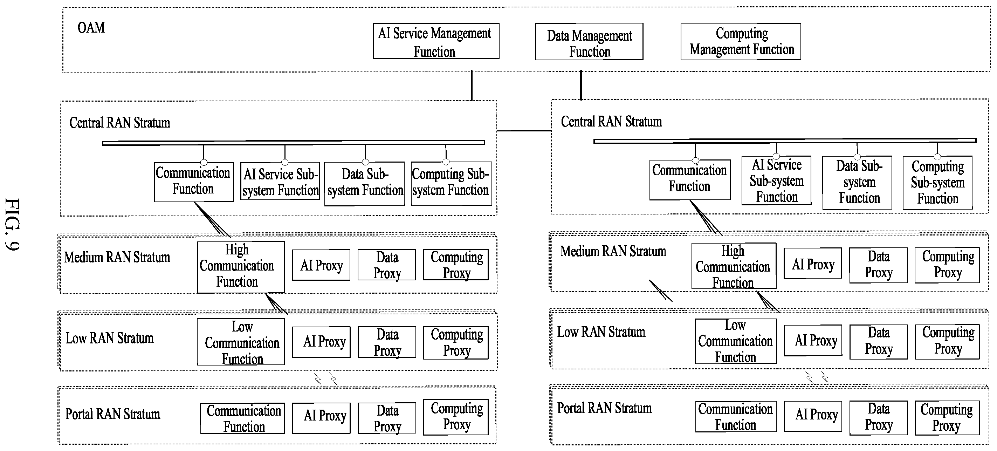

Embodiment 2: Taking a cross-base station multi-cell traffic steering strategy generation process as an example, the Consumer may be located in the Central Stratum of one of the involved base stations, or may be located in a common functional part outside the base station (such as the OAM), which is not limited herein. Taking two base stations as an example, Base Station 1 serves as a summary traffic prediction base station, and the process is as shown in Fig. 9:
Where:
The Consumer first configures the AI Instance required for generating a traffic steering strategy for the Medium Stratum where each cell is located, and Steps 1, 2 and 3 can be executed in parallel.

Step 1: The Consumer configures the AI Instance required for traffic prediction for the "Instance Execution" of the Computing Proxy of Base Station 1 through the "Instance Management" of the AI Service Sub-system Function and the "Instance Proxy" of the AI Proxy of Base Station 1, and the specific process refers to Embodiment 2;
Step 2: The Consumer configures the AI Instance required for traffic prediction for the "Instance Execution" of the Computing Proxy of Base Station 2 through the "Instance Management" of the AI Service Sub-system Function and the "Instance Proxy" of the AI Proxy of Base Station 2, and the specific process refers to Embodiment 2;
Step 3: The Consumer configures the AI Instance required for total traffic prediction for the "Instance Execution" of the Computing Sub-system Function through the "Instance Management" of the AI Service Sub-system Function of Base Station 1, and the specific process refers to Embodiment 2;
Each cell performs traffic prediction separately and returns a traffic prediction result to the "Instance Execution" of the Computing Sub-system Function, and Steps 4-5 and Steps 6-7 can be executed in parallel.

Step 4: The "Instance Execution" of the Computing Proxy of Base Station 1 performs cell traffic prediction (which may include multiple cells);
Step 5: The "Instance Execution" of the Computing Proxy of Base Station 1 returns a cell traffic prediction result (which may include multiple cells) to the "Instance Execution" of the Computing Sub-system Function, and the transmission process may be through the "Instance Proxy" of the AI Proxy and the "Instance Management" of the AI Service Sub-system Function of Base Station 1;
Step 6: The "Instance Execution" of the Computing Proxy of Base Station 2 performs cell traffic prediction (which may include multiple cells);
Step 7: The "Instance Execution" of the Computing Proxy of Base Station 2 returns a cell traffic prediction result (which may include multiple cells) to the "Instance Execution" of the Computing Sub-system Function, and the transmission process may be through the "Instance Proxy" of the AI Proxy of Base Station 2 and the "Instance Management" of the AI Service Sub-system Function of Base Station 2 and Base Station 1;
Step 8: The "Instance Execution" of the Computing Sub-system Function of Base Station 1 performs total traffic prediction according to the traffic prediction results of each cell and by applying the configured total traffic prediction AI Instance;
Step 9: The "Instance Execution" of the Computing Sub-system Function of Base Station 1 generates a traffic steering strategy for each cell according to the total traffic prediction result;
Step 10: The "Instance Execution" of the Computing Sub-system Function of Base Station 1 returns the traffic steering strategy to the Consumer.

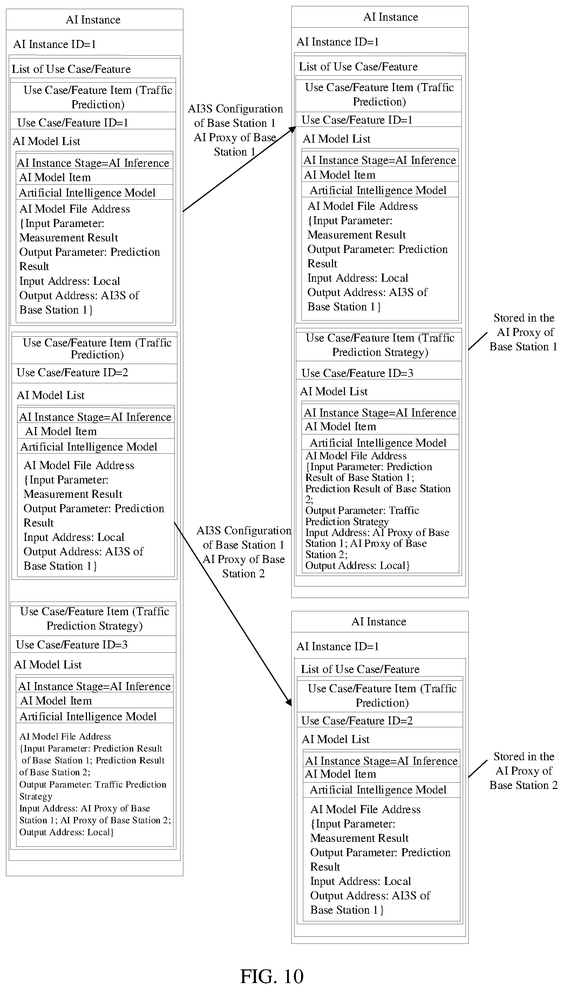

The configuration of the AI Instance in this embodiment is as shown in Fig. 10.

The context of AI Instance ID=1 is stored in the AI Service Sub-system Function of Base Station 1 (BS1), which includes 3 Use Cases (application scenarios):
The Use Case 1 model is used to configure traffic prediction in the AI proxy of BS1, whose input parameter is a locally collected measurement result, and output parameter is a traffic prediction result sent to the AI3S of BS1.

The Use Case 2 model is used to configure traffic prediction in the AI proxy of Base Station 2 (BS2), whose input parameter is a locally collected measurement result, and output parameter is a traffic prediction result sent to the AI3S of BS1.

The Use Case 3 model is used to configure a traffic steering strategy in BS1, whose input parameters are traffic prediction results of the AI proxy of BS1 and the AI proxy of BS2, and output parameters are a traffic steering strategy used for the traffic steering configuration strategy of BS1 and BS2.

Embodiment 3: Base station and terminal collaboration use case. Compression and decompression of Channel State Information (CSI) feedback is a key technology, especially when efficient utilization of bandwidth and resources is required in wireless communication. This technology reduces the data volume of CSI feedback by using a bilateral AI model, thereby reducing communication overhead.

In this embodiment, a base station and a terminal cooperate to complete AI-enabled CSI feedback compression and decompression through AI Instance configuration. The AI Instance includes model information of the base station and the terminal, time points at which the base station and the terminal start CSI feedback compression and decompression respectively, to realize synchronous compression and decompression of both parties.

The process includes:
Step 1: A UE triggers the configuration of the AI Instance on the Base Station (BS) side by sending a request message for deploying an AI Instance for CSI feedback compression/decompression to the "Instance Management" of the AI3S (the message carries an Instance ID or an Instance Name for CSI feedback compression/decompression and an activation time).

Step 2: The "Instance Management" of the AI3S queries the AI Instance information of the bilateral model in the Data Function. If there is an AI Instance meeting the requirements of CSI feedback compression/decompression in this scenario, the base station sends the AI Instance information to the UE. At the agreed time, the UE and the base station perform CSI feedback compression and decompression respectively and simultaneously.

Step 3: If there is no suitable AI Instance in the database, the base station first trains the bilateral model to form a new AI Instance, and then sends the AI Instance information to the UE. At the agreed time, the UE and the base station perform CSI feedback compression and decompression respectively and simultaneously.

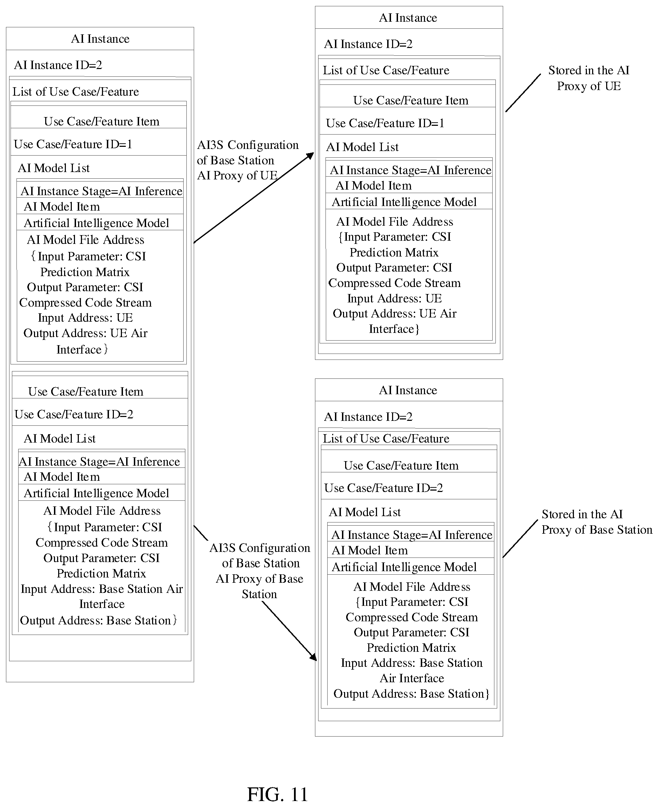

The AI configuration information shown in Fig. 11 should be stored in the Data Function. Where:
The context of AI Instance ID=2 is stored in the BS AI Service Sub-system Function, which includes 2 Use Cases:
The Use Case 1 model is used to configure prediction in the UE AI proxy, whose input parameter is a CSI feedback matrix, and output parameter is a CSI compressed code stream which is then sent to the BS.

The Use Case 2 model is used to configure prediction in the BS AI proxy, whose input parameter is a CSI compressed code stream sent by the UE side, and output parameter is a CSI feedback matrix.

Optionally, the method in the embodiment of this disclosure further includes:
Sending, by the second functional network layer to the first functional network layer, performance management feedback data of the target AI instance;
Updating the target AI instance by the first functional network layer according to the performance management feedback data.

The above-mentioned performance management feedback data includes the accuracy of the AI Instance, performance indicator requirements of the AI Instance and the like.

By updating the target AI instance, the target AI instance can better implement the AI service.

The update of an AI instance is described below with reference to Embodiment 4 and Embodiment 5.

### Embodiment 4

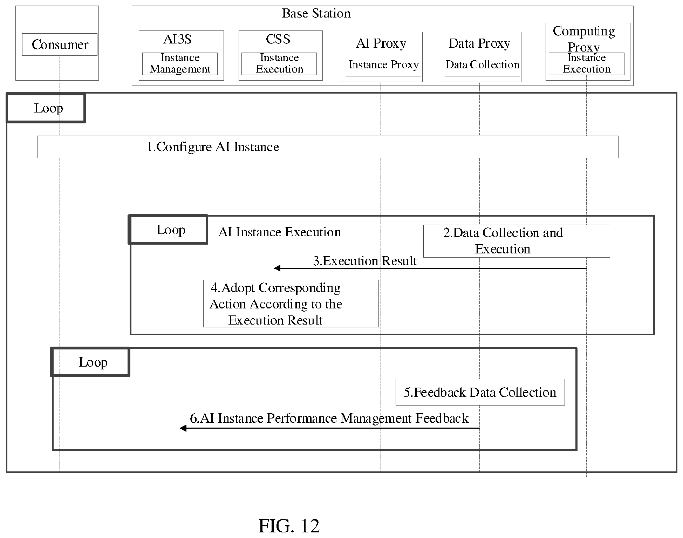

As shown in Fig. 12, the process includes:
Step 1: A "Customer" triggers the configuration of an AI Instance by sending an AI Instance deployment request message to the "Instance Management" of the AI3S (the message carries an Instance ID or an Instance Name and an activation time).
Step 2: The "Computing Proxy" uses the data collected by the "Data Proxy" as an input to execute the AI Instance.
Step 3: The "Computing Proxy" sends an execution result to the "Computing Sub-system Function" of the AI3S.
Step 4: The "Computing Sub-system Function" of the AI3S takes a corresponding action according to the execution result.
Step 5: The "Data Collection" of the "Data Proxy" collects feedback data.
Step 6: The "Data Collection" of the "Data Proxy" sends performance management feedback data to the "Instance Management" of the AI3S for evaluation and update of the AI Instance.

### Embodiment 5

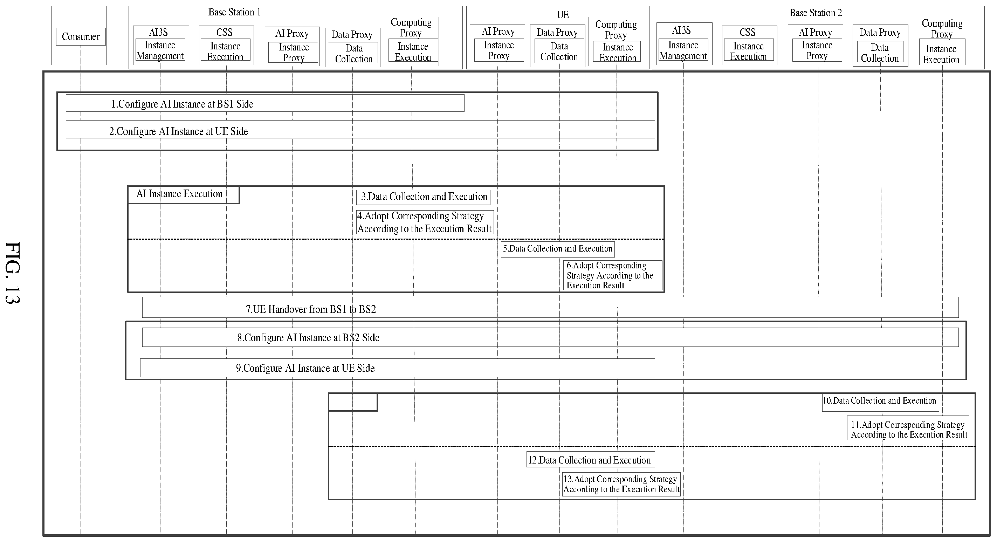

As shown in Fig. 13, the process includes:
Step 1: The "Customer" triggers the configuration of the AI Instance on the BS1 side by sending an AI Instance deployment request message to the "Instance Management" of the AI3S (the message carries an Instance ID or an Instance Name and an activation time).
Step 2: The "Customer" triggers the configuration of the AI Instance on the UE side by sending an AI Instance deployment request message to the "Instance Management" of the AI3S (the message carries an Instance ID or an Instance Name and an activation time).
Step 3: The "Computing Proxy" on the BS1 side executes the AI Instance with the data collected by the "Data Proxy" as input.
Step 4: The "Computing Proxy" on the BS1 side adopts a corresponding strategy according to the execution result.
Step 5: The "Computing Proxy" on the UE side executes the AI Instance with the data collected by the "Data Proxy" as input.
Step 6: The "Computing Proxy" on the UE side adopts a corresponding strategy according to the execution result.
Step 7: The UE hands over from BS1 to BS2 and performs context transfer related to the AI Instance.
Step 8: The "Customer" triggers the configuration of the AI Instance on the BS2 side by sending an AI Instance deployment request message to the "Instance Management" of the AI3S (the message carries an Instance ID or an Instance Name and an activation time).
Step 9: The "Customer" triggers the configuration of the AI Instance on the UE side by sending an AI Instance deployment request message to the "Instance Management" of the AI3S (the message carries an Instance ID or an Instance Name and an activation time).
Step 10: The "Computing Proxy" on the BS2 side executes the AI Instance with the data collected by the "Data Proxy" as input.
Step 11: The "Computing Proxy" on the BS2 side adopts a corresponding strategy according to the execution result.
Step 12: The "Computing Proxy" on the UE side executes the AI Instance with the data collected by the "Data Proxy" as input.
Step 13: The "Computing Proxy" on the UE side adopts a corresponding strategy according to the execution result.

This embodiment realizes the update of the AI Instance for the terminal mobility scenario.

For the scenario-oriented AI Instance application, the demodulation function includes channel estimation, equalization and demodulation sub-modules. For different scenarios, such as UE speed, indoor/outdoor, rural/suburban or urban areas, the AI models corresponding to each sub-module of the demodulation function may not be the same, and even some sub-modules may use non-AI models. In this case, for each specific scenario, the demodulation function may need to generate different AI Instance instances and store them in the database. When facing a specific scenario, the corresponding AI Instance can be called (through an Instance management request, an AI proxy request, etc.) to adapt to the scenario.

The solution of the embodiments of the present disclosure can realize a mechanism for unified description and flexible configuration of AI Instance services between and within each node (base station, terminal) of the radio access network, perfect the RAN intelligent architecture solution in the related art, and solve the problem of collaborative optimization of multi-objectives of wireless communication scenarios (conference venues, urban areas, suburban areas, etc.), RAN use cases (mobility, load balance, energy saving, V2X, etc.) and services (XR, automatic driving, etc.) faced by the intelligent architecture solution in the related art, as well as the problem of collaborative optimization between nodes within the radio access network.

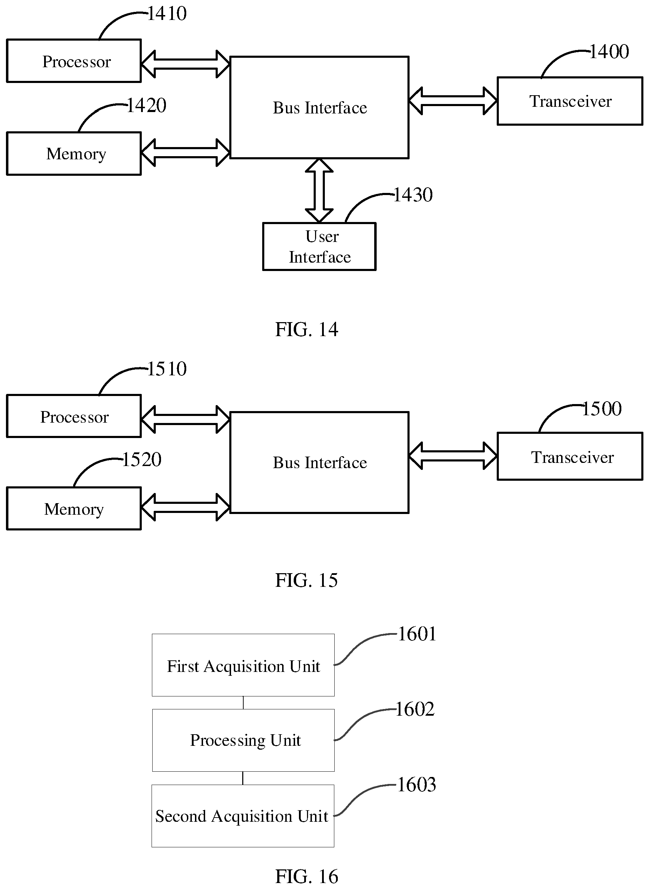

As shown in Fig. 14, an embodiment of the present disclosure provides an apparatus for processing an artificial intelligence service, applied to a first network node which is a terminal. Specifically, the terminal includes a memory 1420, a transceiver 1400 and a processor 1410;
The memory 1420 is configured to store a computer program; the transceiver 1400 is configured to send and receive data under the control of the processor 1410; the processor 1410 is configured to read the computer program in the memory 1420 and perform the following operations:
Acquiring artificial intelligence (AI) service request information, where the AI service request information includes an identifier or a name of a target AI instance, the target AI instance is used to implement the AI service, and the target AI instance corresponds to different model information in different application scenarios; the model information corresponding to each application scenario includes at least one model;
Triggering a process of applying a target model at a target network node according to the AI service request information, where the target model is a model corresponding to the target AI instance in a target application scenario, and the target application scenario is an application scenario of the AI service at the target network node;
Acquiring a service result of the AI service according to an execution result of the target model in the target network node.

In Fig. 14, the bus architecture may include any number of interconnected buses and bridges, and specifically links various circuits of one or more processors represented by the processor 1410 and a memory represented by the memory 1420 together. The bus architecture may also link various other circuits such as peripheral devices, voltage regulators, and power management circuits together, which are well known in the art and therefore will not be further described herein. The bus interface provides an interface. The transceiver 1400 may be a plurality of components, i.e., including a transmitter and a receiver, providing a unit for communicating with various other devices over transmission media including wireless channels, wired channels, optical fibers, and the like. For different user equipments, the user interface 1430 may also be an interface capable of connecting external and internal required devices, and the connected devices include but are not limited to a keypad, a display, a speaker, a microphone, a joystick, and the like.

The processor 1410 is responsible for managing the bus architecture and general processing, and the memory 1420 may store data used by the processor 1410 when performing operations.

Optionally, the processor 1410 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor executes any of the methods provided by the embodiments of the present disclosure according to the obtained executable instructions by calling the computer program stored in the memory. The processor and the memory may also be physically arranged separately.

Optionally, the target network node includes the first network node.

Optionally, the processor further performs the following operation:
Deploying the target AI instance at the first network node.

Optionally, the first network node includes a first functional network layer and a second functional network layer;
The processor further performs the following operations:
Sending, by the first functional network layer to the second functional network layer, a target AI instance deployment request, where the target AI instance deployment request includes link information of the target AI instance, and the link information is used to indicate storage location information of the target AI instance;
Acquiring and executing the target AI instance according to the link information;
Returning, by the second functional network layer to the first functional network layer, a target AI instance deployment response message.

Optionally, the processor further performs the following operations:
Acquiring, according to a profile of the target AI instance, a model included in the target AI instance;
Generating the target AI instance according to the model.

Optionally, the processor further performs the following operations:
Sending, by the second functional network layer to the first functional network layer, performance management feedback data of the target AI instance;
Updating the target AI instance according to the performance management feedback data.

Optionally, the first network node includes a network node in an access network, a network node in a core network or a terminal;
Or, the target network node includes a network node in an access network, a network node in a core network or a terminal.

Optionally, the AI service includes at least one of the following:
A traffic management service;
A load balance service;
An energy saving service.

It should be noted here that the above apparatus provided by the embodiment of the present disclosure can realize all the method steps realized by the above embodiment of the method for processing an artificial intelligence service applied to the first network node, and can achieve the same technical effects. The same parts and beneficial effects as those in the method embodiment will not be described in detail in this embodiment.

As shown in Fig. 15, an embodiment of the present disclosure further provides an apparatus for processing an artificial intelligence service, applied to a first network node which is a base station. The base station includes a memory 1520, a transceiver 1500 and a processor 1510;
The memory 1520 is configured to store a computer program; the transceiver 1500 is configured to send and receive data under the control of the processor; the processor 1510 is configured to read the computer program in the memory and perform the following operations:
Acquiring artificial intelligence (AI) service request information, where the AI service request information includes an identifier or a name of a target AI instance, the target AI instance is used to implement the AI service, and the target AI instance corresponds to different model information in different application scenarios; the model information corresponding to each application scenario includes at least one model;
Triggering a process of applying a target model at a target network node according to the AI service request information, where the target model is a model corresponding to the target AI instance in a target application scenario, and the target application scenario is an application scenario of the AI service at the target network node;
Acquiring a service result of the AI service according to an execution result of the target model in the target network node.

In Fig. 15, the bus architecture may include any number of interconnected buses and bridges, and specifically links various circuits of one or more processors represented by the processor 1510 and a memory represented by the memory 1520 together. The bus architecture may also link various other circuits such as peripheral devices, voltage regulators, and power management circuits together, which are well known in the art and therefore will not be further described herein. The bus interface provides an interface. The transceiver 1500 may be a plurality of components, i.e., including a transmitter and a receiver, providing a unit for communicating with various other devices over transmission media including wireless channels, wired channels, optical fibers, and the like. The processor 1510 is responsible for managing the bus architecture and general processing, and the memory 1520 may store data used by the processor 1510 when performing operations.

The processor 1510 may be a CPU, an ASIC, an FPGA or a CPLD, and the processor may also adopt a multi-core architecture.

It should be noted here that the above apparatus provided by the embodiment of the present disclosure can realize all the method steps realized by the above embodiment of the method for processing an artificial intelligence service, and can achieve the same technical effects. The same parts and beneficial effects as those in the method embodiment will not be described in detail in this embodiment.

As shown in Fig. 16, an embodiment of the present disclosure further provides an apparatus for processing an artificial intelligence service, applied to a first network node. The apparatus includes:
A first acquisition unit 1601, configured to acquire artificial intelligence (AI) service request information, where the AI service request information includes an identifier or a name of a target AI instance, the target AI instance is used to implement the AI service, and the target AI instance corresponds to different model information in different application scenarios; the model information corresponding to each application scenario includes at least one model;
A processing unit 1602, configured to trigger a process of applying a target model at a target network node according to the AI service request information, where the target model is a model corresponding to the target AI instance in a target application scenario, and the target application scenario is an application scenario of the AI service at the target network node;
A second acquisition unit 1603, configured to acquire a service result of the AI service according to an execution result of the target model in the target network node.

Optionally, the target network node includes the first network node.

Optionally, the apparatus of the embodiment of the present disclosure further includes:
A deployment unit, configured to deploy the target AI instance at the first network node.

Optionally, the first network node includes a first functional network layer and a second functional network layer;
The deployment unit is configured to:
Send, by the first functional network layer to the second functional network layer, a target AI instance deployment request, where the target AI instance deployment request includes link information of the target AI instance, and the link information is used to indicate storage location information of the target AI instance;
Acquire and execute the target AI instance according to the link information;
Return, by the second functional network layer to the first functional network layer, a target AI instance deployment response message.

Optionally, the apparatus further includes:
A third acquisition unit, configured to acquire, according to a profile of the target AI instance, a model included in the target AI instance before the first functional network layer sends the target AI instance deployment request to the second functional network layer;
A generation unit, configured to generate the target AI instance according to the model.

Optionally, the apparatus further includes:
A sending unit, configured to send performance management feedback data of the target AI instance to the first functional network layer;
An update unit, configured to update the target AI instance according to the performance management feedback data.

Optionally, the first network node includes a network node in an access network, a network node in a core network or a terminal;
Or, the target network node includes a network node in an access network, a network node in a core network or a terminal.

Optionally, the AI service includes at least one of the following:
A traffic management service;
A load balance service;
An energy saving service.

It should be noted here that the above apparatus provided by the embodiment of the present disclosure can realize all the method steps realized by the above embodiment of the method for processing an artificial intelligence service, and can achieve the same technical effects. The same parts and beneficial effects as those in the method embodiment will not be described in detail in this embodiment.

It should be noted that the division of units in the embodiments of the present disclosure is schematic, and is only a logical function division, and there may be other division manners in actual implementation. In addition, each functional unit in each embodiment of the present disclosure may be integrated into one processing unit, or each unit may exist alone physically, or two or more units may be integrated into one unit. The above integrated units may be implemented in the form of hardware, or in the form of software functional units.

If the integrated unit is implemented in the form of a software functional unit and sold or used as an independent product, it may be stored in a processor-readable storage medium. Based on such understanding, the technical solution of the present disclosure, essentially or the part that contributes to the related art, or all or part of the technical solution may be embodied in the form of a software product, which is stored in a storage medium and includes several instructions to enable a computer device (which may be a personal computer, a server, or a network device, etc.) or a processor to execute all or part of the steps of the methods described in each embodiment of the present disclosure. The aforementioned storage medium includes: a USB flash drive, a mobile hard disk, a Read-Only Memory (ROM), a Random Access Memory (RAM), a magnetic disk, an optical disc, and other various media that can store program codes.

In some embodiments of the present disclosure, a processor-readable storage medium is also provided, where the processor-readable storage medium stores program instructions, and the program instructions are used to enable a processor to perform all the steps realized by the above embodiment of the method for processing an artificial intelligence service, and can achieve the same technical effects. The same parts and beneficial effects as those in the method embodiment will not be described in detail in this embodiment.

The terminal device involved in the embodiments of the present disclosure may be a device that provides voice and/or data connectivity to a user, a handheld device with a wireless connection function, or another processing device connected to a wireless modem, etc. In different systems, the name of the terminal device may also be different. For example, in a 5G system, the terminal device may be referred to as a User Equipment (UE). A wireless terminal device may communicate with one or more core networks (CN) via a Radio Access Network (RAN). The wireless terminal device may be a mobile terminal device, such as a mobile phone (also referred to as a "cellular" phone) and a computer with a mobile terminal device, for example, a portable, pocket, handheld, computer-built-in or vehicle-mounted mobile device that exchanges voice and/or data with the radio access network. Examples include a Personal Communication Service (PCS) phone, a cordless phone, a Session Initiated Protocol (SIP) phone, a Wireless Local Loop (WLL) station, a Personal Digital Assistant (PDA), and other devices. The wireless terminal device may also be referred to as a system, a subscriber unit, a subscriber station, a mobile station, a mobile, a remote station, an access point, a remote terminal, an access terminal, a user terminal, a user agent, a user device, which is not limited in the embodiments of the present disclosure.

The network device (or network-side device) involved in the embodiments of the present disclosure may be a base station, and the base station may include a plurality of cells serving terminals. According to different specific application occasions, the base station may also be referred to as an access point, or a device in the access network that communicates with a wireless terminal device through one or more sectors on an air interface, or by other names. The network device may be used to convert received air frames and Internet Protocol (IP) packets into each other, acting as a router between the wireless terminal device and the rest of the access network, where the rest of the access network may include an IP communication network. The network device may also coordinate the management of air interface attributes. For example, the network device involved in the embodiments of the present disclosure may be a Base Transceiver Station (BTS) in the Global System for Mobile communications (GSM) or Code Division Multiple Access (CDMA), a NodeB in Wide-band Code Division Multiple Access (WCDMA), an evolved Node B (eNB or e-NodeB) in the Long Term Evolution (LTE) system, a 5G base station (gNB) in the 5G network architecture (next generation system), a Home evolved Node B (HeNB), a relay node, a femto base station, a pico base station, etc., which is not limited in the embodiments of the present disclosure. In some network structures, the network device may include a Centralized Unit (CU) node and a Distributed Unit (DU) node, and the centralized unit and the distributed unit may also be arranged geographically separately.

Multi-Input Multi-Output (MIMO) transmission may be performed between the network device and the terminal device by using one or more antennas respectively, and the MIMO transmission may be Single User MIMO (SU-MIMO) or Multiple User MIMO (MU-MIMO). According to the form and number of antenna combinations, MIMO transmission may be 2Dimension MIMO (2D-MIMO), 3Dimension MIMO (3D-MIMO), Full Dimension MIMO (FD-MIMO) or massive-MIMO, and may also be diversity transmission, precoding transmission, beamforming transmission, etc.

Those skilled in the art should understand that the embodiments of the present disclosure may be provided as a method, a system, or a computer program product. Therefore, the present disclosure may adopt the form of an entirely hardware embodiment, an entirely software embodiment, or an embodiment combining software and hardware aspects. Moreover, the present disclosure may adopt the form of a computer program product implemented on one or more computer-usable storage media (including but not limited to disk storage, optical storage, etc.) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams may be implemented by computer-executable instructions. These computer-executable instructions may be provided to the processor of a general-purpose computer, a special-purpose computer, an embedded processor, or other programmable data processing devices to produce a machine, such that the instructions executed by the processor of the computer or other programmable data processing devices produce an apparatus for realizing the functions specified in one or more flows of the flowchart and/or one or more blocks of the block diagram.

These computer-executable instructions may also be stored in a processor-readable memory that can guide a computer or other programmable data processing devices to work in a specific manner, such that the instructions stored in the processor-readable memory produce an article of manufacture including an instruction apparatus, which realizes the functions specified in one or more flows of the flowchart and/or one or more blocks of the block diagram.

These computer-executable instructions may also be loaded onto a computer or other programmable data processing devices, such that a series of operation steps are executed on the computer or other programmable devices to produce computer-implemented processing, such that the instructions executed on the computer or other programmable devices provide steps for realizing the functions specified in one or more flows of the flowchart and/or one or more blocks of the block diagram.

It should be noted that, it should be understood that the division of the above modules is only a division of logical functions, and in actual implementation, all or part of them may be integrated into a physical entity, or may be physically separated. Moreover, these modules may all be implemented in the form of software called by processing elements; or all of them may be implemented in the form of hardware; or some modules may be implemented in the form of software called by processing elements, and some modules may be implemented in the form of hardware. For example, a determination module may be a separately provided processing element, or may be integrated into a certain chip of the above apparatus for implementation. In addition, it may also be stored in the memory of the above apparatus in the form of program codes, and called and executed by a certain processing element of the above apparatus to realize the functions of the above determination module. The implementation of other modules is similar. In addition, all or part of these modules may be integrated together or implemented independently. The processing element described herein may be an integrated circuit with signal processing capability. In the implementation process, each step of the above method or each module of the above apparatus may be completed by an integrated logic circuit of hardware in the processor element or an instruction in the form of software.

For example, each module, unit, sub-unit or sub-module may be one or more integrated circuits configured to implement the above method, such as: one or more Application Specific Integrated Circuits (ASICs), or one or more Digital Signal Processors (DSPs), or one or more Field Programmable Gate Arrays (FPGAs), etc. For another example, when one of the above modules is implemented in the form of a processing element scheduling program code, the processing element may be a general-purpose processor, such as a Central Processing Unit (CPU) or other processors that can call program codes. For another example, these modules may be integrated together and implemented in the form of a System-on-a-Chip (SOC).

The terms such as "first", "second" and the like in the specification and claims of this disclosure are used to distinguish similar objects, and are not necessarily used to describe a specific order or sequence. It should be understood that the terms used in this way can be interchanged under appropriate circumstances, so that the embodiments of this disclosure described herein can be implemented in an order other than those illustrated or described herein. In addition, the terms "include" and "have" and any variations thereof are intended to cover non-exclusive inclusion. For example, a process, method, system, product or device including a series of steps or units is not necessarily limited to the clearly listed steps or units, but may include other steps or units that are not clearly listed or are inherent to the process, method, product or device. In addition, the use of "and/or" in the specification and claims means at least one of the connected objects. For example, A and/or B and/or C means seven cases including A alone, B alone, C alone, both A and B exist, both B and C exist, both A and C exist, and all A, B and C exist. Similarly, the use of "at least one of A and B" in the specification and claims should be understood as "A alone, B alone, or both A and B exist".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A method for processing an artificial intelligence service, performed by a first network node, the method comprising:
acquiring artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
triggering a process of applying a target model at a target network node according to the AI service request information, wherein the target model is a model corresponding to the target AI instance in a target application scenario, and the target application scenario is an application scenario of the AI service at the target network node;
acquiring a service result of the AI service according to an execution result of the target model in the target network node.

2. The method according to claim 1, wherein the target network node comprises the first network node.

3. The method according to claim 2, further comprising:
deploying the target AI instance at the first network node.

4. The method according to claim 3, wherein the first network node comprises a first functional network layer and a second functional network layer;
the deploying the target AI instance at the first network node comprises:
sending, by the first functional network layer to the second functional network layer, a target AI instance deployment request, wherein the target AI instance deployment request comprises link information of the target AI instance, and the link information is used to indicate storage location information of the target AI instance;
acquiring and executing the target AI instance by the second functional network layer according to the link information;
returning, by the second functional network layer to the first functional network layer, a target AI instance deployment response message.

5. The method according to claim 4, wherein before the first functional network layer sends the target AI instance deployment request to the second functional network layer, the method further comprises:
acquiring, by the first functional network layer according to a profile of the target AI instance, a model included in the target AI instance;
generating the target AI instance by the first functional network layer according to the model.

6. The method according to claim 4, further comprising:
sending, by the second functional network layer to the first functional network layer, performance management feedback data of the target AI instance;
updating the target AI instance by the first functional network layer according to the performance management feedback data.

7. The method according to claim 2, wherein the first network node comprises a network node in an access network, a network node in a core network or a terminal;
or, the target network node comprises a network node in an access network, a network node in a core network or a terminal.

8. The method according to claim 1, wherein the AI service comprises at least one of the following:
a traffic management service;
a load balance service;
an energy saving service.

9. An apparatus for processing an artificial intelligence service, comprising a memory, a transceiver and a processor;
wherein the memory is configured to store a computer program; the transceiver is configured to send and receive data under the control of the processor; the processor is configured to read the computer program in the memory and perform the following operations:
acquiring artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
triggering a process of applying a target model at a target network node according to the AI service request information, wherein the target model is a model corresponding to the target AI instance in a target application scenario, and the target application scenario is an application scenario of the AI service at the target network node;
acquiring a service result of the AI service according to an execution result of the target model in the target network node.

10. The apparatus according to claim 9, wherein the target network node comprises the first network node.

11. The apparatus according to claim 10, wherein the processor further performs the following operation:
deploying the target AI instance at the first network node.

12. The apparatus according to claim 11, wherein the first network node comprises a first functional network layer and a second functional network layer;
the processor further performs the following operations:
sending, by the first functional network layer to the second functional network layer, a target AI instance deployment request, wherein the target AI instance deployment request comprises link information of the target AI instance, and the link information is used to indicate storage location information of the target AI instance;
acquiring and executing the target AI instance according to the link information;
returning, by the second functional network layer to the first functional network layer, a target AI instance deployment response message.

13. The apparatus according to claim 12, wherein the processor further performs the following operations:
acquiring, according to a profile of the target AI instance, a model included in the target AI instance;
generating the target AI instance according to the model.

14. The apparatus according to claim 12, wherein the processor further performs the following operations:
sending, by the second functional network layer to the first functional network layer, performance management feedback data of the target AI instance;
updating the target AI instance according to the performance management feedback data.

15. The apparatus according to claim 10, wherein the first network node comprises a network node in an access network, a network node in a core network or a terminal;
or, the target network node comprises a network node in an access network, a network node in a core network or a terminal.

16. The apparatus according to claim 9, wherein the AI service comprises at least one of the following:
a traffic management service;
a load balance service;
an energy saving service.

17. An apparatus for processing an artificial intelligence service, comprising:
a first acquisition unit, configured to acquire artificial intelligence, AI, service request information, wherein the AI service request information comprises an identifier or a name of a target AI instance, the target AI instance is used to implement the AI service, and the target AI instance corresponds to different model information in different application scenarios; the model information corresponding to each application scenario comprises at least one model;
a processing unit, configured to trigger a process of applying a target model at a target network node according to the AI service request information, wherein the target model is a model corresponding to the target AI instance in a target application scenario, and the target application scenario is an application scenario of the AI service at the target network node;
a second acquisition unit, configured to acquire a service result of the AI service according to an execution result of the target model in the target network node.

18. The apparatus according to claim 17, wherein the target network node comprises the first network node.

19. The apparatus according to claim 18, further comprising:
a deployment unit, configured to deploy the target AI instance at the first network node.

20. The apparatus according to claim 19, wherein the first network node comprises a first functional network layer and a second functional network layer;
the deployment unit is configured to:
send, by the first functional network layer to the second functional network layer, a target AI instance deployment request, wherein the target AI instance deployment request comprises link information of the target AI instance, and the link information is used to indicate storage location information of the target AI instance;
acquire and execute the target AI instance according to the link information;
return, by the second functional network layer to the first functional network layer, a target AI instance deployment response message.

21. The apparatus according to claim 20, further comprising:
a third acquisition unit, configured to acquire, according to a profile of the target AI instance, a model included in the target AI instance before the first functional network layer sends the target AI instance deployment request to the second functional network layer;
a generation unit, configured to generate the target AI instance according to the model.

22. The apparatus according to claim 20, further comprising:
a sending unit, configured to send performance management feedback data of the target AI instance to the first functional network layer;
an update unit, configured to update the target AI instance according to the performance management feedback data.

23. The apparatus according to claim 18, wherein the first network node comprises a network node in an access network, a network node in a core network or a terminal;
or, the target network node comprises a network node in an access network, a network node in a core network or a terminal.

24. The apparatus according to claim 17, wherein the AI service comprises at least one of the following:
a traffic management service;
a load balance service;
an energy saving service.

25. A processor-readable storage medium, wherein the processor-readable storage medium stores a computer program, and the computer program is used to enable a processor to perform the steps of the method for processing an artificial intelligence service according to any one of claims 1 to 8.
